# EUROPEAN PATENT APPLICATION

(11) **EP 4 756 203 A1**
(43) Date of publication of application: **10.06.2026**
(21) Application number: 25217664.9
(22) Date of filing: 21.11.2025
(51) Int. Cl.: F02C 7/20, B33Y 80/00, F01D 25/28, F02K 1/80

(54) **INTEGRATED VEHICLE MOUNT STRUCTURE**

(30) Priority: 05.12.2024 US 202418969535
(71) Applicant: RTX Corporation, Farmington, CT 06032 (US)
(72) Inventor: Binek, Lawrence A., Glastonbury, 06033 (US); Paulino, Jose R., Jupiter, 33478 (US)
(74) Representative: Schmitt-Nilson Schraud Waibel Wohlfrom Patentanwälte Partnerschaft mbB

(57) **Abstract**

An integrated mount structure (42) including a foundation section (46) located adjacent to a shoulder section (40) of an aft case section (30) of an engine (10); a column section (50) adjacent the foundation section, the column section is configured to contact a vehicle (44) and couple the engine with the vehicle; and an internal hollow (58) formed in both the column section and the foundation section.

## Description

The present disclosure is directed to the improved integrated vehicle mount structure.

Small engines typically feature a mounting feature in order to connect with a vehicle. Traditionally the mounting feature is a separate part which is threaded into a traditionally manufactured boss. In an additive configuration, the mounting pin is typically grown off the aft case. The pin is part of a monolithic (unitized) structure with considerable consolidated mass. Owing to the nature of the unitized structure, it is difficult to dissipate thermal energy, since the thermal path is arduous for the pin to dissipate the heat. As such, super elevation in the powder bed is very likely to occur, resulting in a build failure late in the build. The pin structure can stand proud and contact the recoater equipment.

In accordance with the present disclosure, there is provided an integrated mount structure comprising a foundation section located adjacent to a shoulder section of an aft case section of an engine; a column section adjacent the foundation section, the column section is configured to contact a vehicle and couple the engine with the vehicle; and an internal hollow formed in both the column section and the foundation section.

Particular embodiments further may include at least one, or a plurality of, the following optional features, alone or in combination with each other:

A further embodiment of any of the foregoing embodiments may additionally and/or alternatively include the foundation section comprises a relatively thickened portion with a predetermined wall thickness integrated with the shoulder section.

A further embodiment of any of the foregoing embodiments may additionally and/or alternatively include the integrated mount structure comprises a transition section between the foundation section and the column section.

A further embodiment of any of the foregoing embodiments may additionally and/or alternatively include the internal hollow comprises a lachrymiformal profile.

A further embodiment of any of the foregoing embodiments may additionally and/or alternatively include the internal hollow comprises a tube portion located within the column section.

A further embodiment of any of the foregoing embodiments may additionally and/or alternatively include the internal hollow comprises a spherical portion located within the foundation section.

A further embodiment of any of the foregoing embodiments may additionally and/or alternatively include the integrated mount structure is configured to mount the engine via an interference fit.

In accordance with the present disclosure, there is provided an aft case section of an engine with an integrated vehicle mount structure comprising a foundation section the foundation section is located adjacent to a shoulder section of the aft case section, the foundation section extends from the shoulder section and includes a first diameter; a column section adjacent the foundation section, the column section is configured to contact a vehicle and couple with the vehicle, the column section includes a second diameter; and an internal hollow formed in both the column section and the foundation section.

Particular embodiments further may include at least one, or a plurality of, the following optional features, alone or in combination with each other:

A further embodiment of any of the foregoing embodiments may additionally and/or alternatively include the internal hollow comprises a void in the absence of material internally to the foundation section and the column section.

A further embodiment of any of the foregoing embodiments may additionally and/or alternatively include the integrated mount structure comprises a transition section between the foundation section and the column section.

A further embodiment of any of the foregoing embodiments may additionally and/or alternatively include the internal hollow comprises a spherical portion located within the foundation section; the internal hollow comprises a tube portion located within the column section; and an open end formed in the tube portion proximate a distal end of the column section, wherein the tube portion is configured to allow for powder extraction during a build process, such that powder can escape the open end during the build process.

A further embodiment of any of the foregoing embodiments may additionally and/or alternatively include the spherical portion transitions to the tube portion through a radius portion, the radius portion includes a changing diameter from the spherical portion to the tube portion.

A further embodiment of any of the foregoing embodiments may additionally and/or alternatively include the integrated vehicle mount structure is configured to mount the engine onto the vehicle via an interference fit.

In accordance with the present disclosure, there is provided a process for forming an aft case section of an engine with an integrated vehicle mount structure comprising forming a foundation section adjacent to a shoulder section of the aft case section; extending the foundation section from the shoulder section, the foundation section including a first diameter; forming a column section adjacent the foundation section, configuring the column section to contact a vehicle and couple with the vehicle, the column section includes a second diameter; and forming an internal hollow in both the column section and the foundation section.

Particular embodiments further may include at least one, or a plurality of, the following optional features, alone or in combination with each other:

A further embodiment of any of the foregoing embodiments may additionally and/or alternatively include the process further comprising forming a transition section between the foundation section and the column section.

A further embodiment of any of the foregoing embodiments may additionally and/or alternatively include the process further comprising forming a tube portion in the internal hollow located within the column section; forming a spherical portion in the internal hollow located within the foundation section; forming an open end in the tube portion proximate a distal end of the column section; and configuring the tube portion to allow for powder extraction during a build process, such that powder can escape the open end during the build process.

A further embodiment of any of the foregoing embodiments may additionally and/or alternatively include the process further comprising forming a radius portion between the spherical portion and the tube portion; and configuring the radius portion to transition the spherical portion to the tube portion, the radius portion including a changing diameter from the spherical portion to the tube portion.

A further embodiment of any of the foregoing embodiments may additionally and/or alternatively include the process further comprising configuring the integrated vehicle mount structure to mount a gas turbine engine onto a vehicle.

A further embodiment of any of the foregoing embodiments may additionally and/or alternatively include the process further comprising forming the internal hollow comprising a void in the absence of material internally to the foundation section and the column section.

A further embodiment of any of the foregoing embodiments may additionally and/or alternatively include the process further comprising dissipating thermal energy through the internal hollow; avoiding super elevation of build materials; and reducing formation the consolidated mass of the integrated mount structure.

Other details of the integrated vehicle mount structure are set forth in the following detailed description and the accompanying drawings wherein like reference numerals depict like elements.
Fig. 1 is a cross sectional view schematic representation of an exemplary gas turbine engine.
Fig. 2 is a schematic representation of an aft case with exemplary integrated vehicle mount structure.
Fig. 3 is a cross sectional view schematic representation of an aft case with exemplary integrated vehicle mount structure.

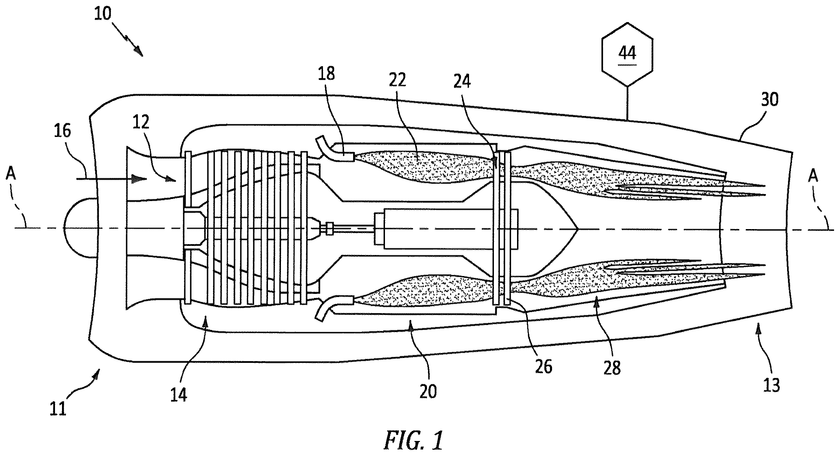

Referring now to Fig. 1, there is illustrated an exemplary gas turbine engine 10, specifically a turbojet engine 10. The gas turbine engine 10 includes an inlet section 12 upstream of a compressor section 14 where air 16 is drawn in and compressed. Fuel 18 is injected into a combustion section 20 downstream of the compressor section 14. The air 16 is mixed with fuel 18 and burned in the combustion section 20. The combusted fuel 18 and air 16 are combined into a highly energized combustion product 22 that expands through a turbine section 24. The products of combustion 22 move downstream over turbine rotors 26, driving the turbine rotors 26 to rotate creating rotary power. The products of combustion 22 move downstream and exit the turbine section 24 to the exhaust nozzle section 28 where engine thrust is developed for propulsion. An axis A is defined along the center of the gas turbine engine 10 from a forward end 11 to an aft end 13.

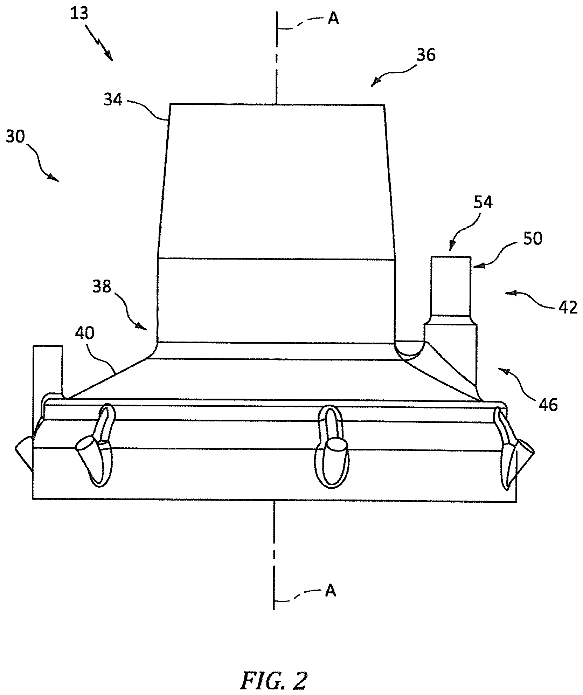

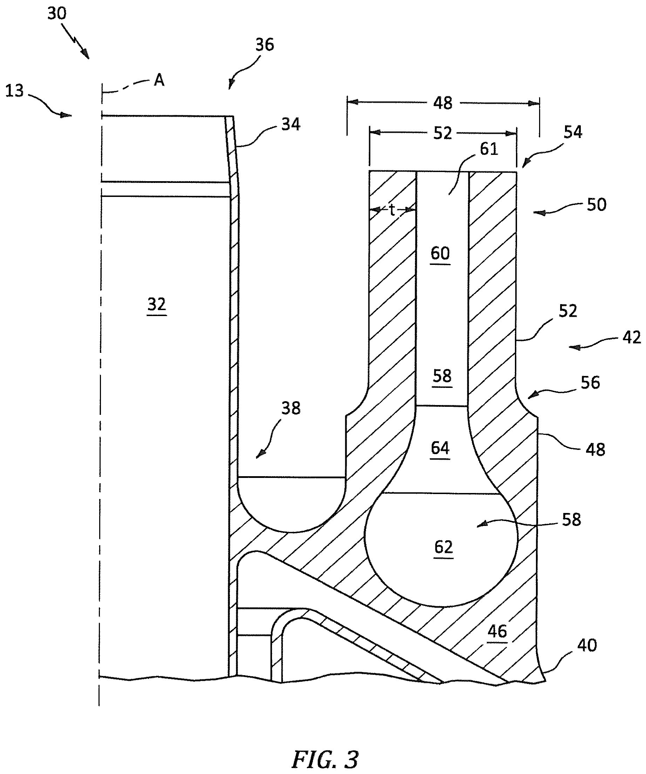

Referring also to Fig. 2 and Fig. 3, a partial and cross-sectional view of an aft case section 30 is shown. The aft case section 30 includes an exhaust cavity 32 within an exhaust wall 34 extending aft axially relative to axis A. the exhaust wall 34 includes a discharge end 36 and a base end 38 opposite the discharge end 36. A shoulder section 40 is formed in the aft case section 30 adjacent to the base end 38 of the exhaust wall 34.

An integrated vehicle mount structure 42 extends from the shoulder section 40 of the aft case section 30. The integrated mount structure 42 can be formed employing additive manufacturing techniques. The integrated vehicle mount structure 42 can be grown from the aft case section 30. The integrated mount structure 42 can be formed integral with the aft case section 30. The integrated mount structure 42 can be grown simultaneously along with the aft case section 30 in the additive manufacturing build. The integrated vehicle mount structure 42 is configured to mount the gas turbine engine 10 onto a vehicle 44 (Fig. 1).

The integrated vehicle mount structure 42 includes a foundation section 46. The foundation section 46 is located adjacent to the shoulder section 40. The foundation section 46 can be integral with the shoulder section 40. The foundation section 46 can include a relatively thickened portion 48 with relatively thicker wall thickness integrated with the shoulder section 40 to provide robust structural properties. The foundation section 46 extends from the shoulder section 40 and includes a cylinder shape with a first diameter 48. The first diameter of 48 is an outside diameter.

The integrated mount structure 42 transitions from the foundation section 46 into a column section 50. The column section 50 can be shaped as a cylinder. The column section 50 can include a second diameter 52. The second diameter 52 is an outside diameter. The second diameter 52 can be smaller than the first diameter 48. In an exemplary embodiment the column section 50 can be shaped as a cylinder with a tapered second diameter 52 that tapers toward a distal end 54 with a decreasing value. The column section 50 can be configured to contact the vehicle 44 and couple with the vehicle 44. It is contemplated that the column section 50 can be in operative communication with the vehicle 44 to support the gas turbine engine 10 on the vehicle. The column section 50 can be a bayonet style mount with the vehicle 44 and have an interference fit. Alternatively, the column section 50 can be configured to mount with the vehicle 44 via another type of fit, such as a snap fit, retaining rings, magnetic fitting, and/or the like.

The integrated mount structure 42 can include a transition section 56 between the foundation section 46 and the column section 50. The transition section 56 can be a varied diameter that transitions from the first diameter 48 of the foundation section 46 decreasing to the second diameter 52 of the column section 50. The transition section 56 can be formed as a radius between the first diameter 48 and the second diameter 52.

The integrated mount structure 42 includes an internal hollow 58. The internal hollow 58 can be formed in both the column section 50 and the foundation section 46. The internal hollow 58 can be formed as a void with no material internally to the foundation section 46 and the column section 50. The internal hollow 58 can be a lachrymiformal profile, such as a teardrop shape. The internal hollow 58 can have a tube portion 60 located within the column section 50. The internal hollow 58 along the tube portion 60 can include a wall thickness "t" of about 0.1 inch. In some embodiments, the wall thickness "t" is between 0.05 and 0.25 inches. An open end 61 can be formed in the tube portion 60 proximate the distal end 54. The tube portion 60 can be configured to allow for powder extraction during the build process, such that powder can escape the open end 61 during the build. The tube portion 60 can have an inner diameter of greater than 20 thousandths of an inch to allow for powder to escape the open end 61.

The internal hollow 58 can include a spherical portion 62. The spherical portion 62 can be located within the foundation section 46. The spherical portion 62 can transition to the tube portion 60 through a radius portion 64. The radius portion 64 includes a changing diameter from the larger spherical portion 62 to the smaller tube portion 60. The radius portion 64 reduces rapid changes in the consolidated cross-sectional area of the integrated mount structure 42. The radius portion 64 can be formed by post build machining techniques. The internal hollow 58 reduces the chance for witness lines borne from changes in cross sectional area occurring on different and sensitive features. The witness lines can be an indication of a potential flaw in the structure of the integrated mount structure 42 or the exhaust nozzle section 28. Rapid changes in cross-sectional area perpendicular to the build direction are avoided by employing the internal hollow 58.

The internal hollow 58 reduces the volume of material formed in the integrated mount structure 42. By reducing the volume of material formed in the integrated mount structure 42 and forming the internal hollow 58 a heat transfer path is formed allowing for thermal energy dissipation from the integrated mount structure 42 during and after the additive manufacturing build. The internal hollow 58 allows for thermal energy to dissipate and avoids super elevation. The formation of the internal hollow 58 reduces the consolidated mass of the integrated mount structure 42. The internal hollow 58 can be sized to create a predetermined quantity of consolidated volume for every unsupported build height value.

A technical advantage of the disclosed integrated vehicle mount structure includes a structure that reduces the volume of material formed in the integrated mount structure.

Another technical advantage of the disclosed integrated vehicle mount structure includes forming an internal hollow which enables a heat transfer path formed allowing for thermal energy dissipation from the integrated mount structure during and after the additive manufacturing build.

Another technical advantage of the disclosed integrated vehicle mount structure includes a structure which allows for thermal energy to dissipate and avoid super elevation.

Another technical advantage of the disclosed integrated vehicle mount structure includes a structure which avoids rapid changes in cross-sectional area perpendicular to the build direction by employing the internal hollow.

Another technical advantage of the disclosed integrated vehicle mount structure includes an internal hollow which reduces the chance for witness lines borne from changes in cross sectional area occurring on different and sensitive features.

There has been provided an integrated vehicle mount structure. While the integrated vehicle mount structure has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A integrated mount structure comprising:
a foundation section located adjacent to a shoulder section of an aft case section of an engine;
a column section adjacent the foundation section, the column section is configured to contact a vehicle and couple the engine with the vehicle; and
an internal hollow formed in both the column section and the foundation section.

2. The integrated mount structure according to claim 1, wherein the foundation section comprises a relatively thickened portion with a predetermined wall thickness integrated with the shoulder section.

3. The integrated mount structure according to claim 1 or 2, wherein the integrated mount structure comprises a transition section between the foundation section and the column section.

4. The integrated mount structure according to any of claims 1 to 3, wherein the internal hollow comprises a lachrymiformal profile.

5. The integrated mount structure according to any of claims 1 to 4, wherein the internal hollow comprises a tube portion located within the column section.

6. The integrated mount structure according to any of claims 1 to 5, wherein the internal hollow comprises a spherical portion located within the foundation section.

7. The integrated mount structure according to claim 5 or 6, comprising an open end formed in the tube portion proximate a distal end of the column section, wherein the tube portion is configured to allow for powder extraction during a build process, such that powder can escape the open end during the build process.

8. The integrated mount structure according to claim 6 or 7, wherein the spherical portion transitions to the tube portion through a radius portion, the radius portion including a changing diameter from the spherical portion to the tube portion.

9. The integrated mount structure according to any of claims 1 to 8, wherein the integrated mount structure is configured to mount the engine via an interference fit.

10. The integrated mount structure according to any of claims 1 to 9, wherein the foundation section extends from the shoulder section of the engine and includes a first diameter; and
the column section is configured to contact the vehicle and couple with the vehicle, the column section including a second diameter.

11. An aft case section of an engine, comprising the integrated vehicle mount structure according to any of claims 1 to 10.

12. A process for forming an aft case section of an engine with an integrated vehicle mount structure comprising:
forming a foundation section adjacent to a shoulder section of the aft case section;
extending the foundation section from the shoulder section, the foundation section including a first diameter;
forming a column section adjacent the foundation section, configuring the column section to contact a vehicle and couple with the vehicle, the column section includes a second diameter; and
forming an internal hollow in both the column section and the foundation section.

13. The process according to claim 12,
further comprising:
forming a transition section between the foundation section and the column section.

14. The process according to claim 12 or 13, further comprising:
forming a tube portion in the internal hollow located within the column section;
forming a spherical portion in the internal hollow located within the foundation section;
forming an open end in the tube portion proximate a distal end of the column section; and
configuring the tube portion to allow for powder extraction during a build process, such that powder can escape the open end during the build process; and/or
further comprising:
forming a radius portion between the spherical portion and the tube portion; and
configuring the radius portion to transition the spherical portion to the tube portion, the radius portion including a changing diameter from the spherical portion to the tube portion.

15. The process according to any of claims 12 to 14, further comprising:
configuring the integrated vehicle mount structure to mount a gas turbine engine onto a vehicle; and/or
further comprising:
forming the internal hollow comprising a void in the absence of material internally to the foundation section and the column section; and/or
further comprising:
dissipating thermal energy through the internal hollow;
avoiding super elevation of build materials; and
reducing formation the consolidated mass of the integrated mount structure.
